Europäisches Patentamt

(19) European Patent Office

Office européen des brevets

(11) Veröffentlichungsnummer: **0 146 066**
**B1**

(12) **EUROPÄISCHE PATENTSCHRIFT**

(45) Veröffentlichungstag der Patentschrift·
**27.09.89**

(21) Anmeldenummer: **84114640.0**

(22) Anmeldetag: **01.12.84**

(51) Int. Cl.⁴: **C 08 J  7/04**, G 03 C  1/80,
**B 44 D  3/18**

(54) Polyesterfolie mit vernetzter Haftvermittlerbeschichtung aus Vinylacetatpolymeren.

(30) Priorität: **12.12.83  US 560647**

(43) Veröffentlichungstag der Anmeldung:
**26.06.85 Patentblatt 85/26**

(45) Bekanntmachung des Hinweises auf die Patenterteilung:
**27.09.89 Patentblatt 89/39**

(84) Benannte Vertragsstaaten:
**DE FR GB LU NL**

(56) Entgegenhaltungen:
**FR-A- 2 182 057**
**GB-A- 1 146 215**
**US-A- 3 615 557**
**US-A- 4 391 767**

(73) Patentinhaber: **HOECHST CELANESE CORPORATION,
Route 202-206 North, Somerville, N.J. 08876 (US)**

(72) Erfinder: **Farrar, Grover L., 711 Crescent Avenue,
Greenville South Carolina 29601 (US)**
Erfinder: **Culbertson, Edwin C., 107 Saratoga Drive,
Greer South Carolina 29651 (US)**

(74) Vertreter: **Euler, Kurt Emil, Dr., HOECHST AG - Werk
KALLE Patentabteilung
Postfach 3540 Rheingaustrasse 190, D-6200 Wiesbaden
(DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die vorliegende Erfindung betrifft orientierte Polyesterfolie, die ein- oder beidseitig mit einer vernetzten Vinylacetatpolymerenmasse beschichtet ist, welche die Oberfläche der Polyesterfolie für zusätzlich aufgebrachte reprografische Beschichtungen oder Mattbeschichtungen aufnahmefähig macht.

Orientierte Polyesterfolie, insbesondere biaxial orientierte Folie aus Polyethylenterephthalat (PET), wird in großem Umfang als Trägermaterial für Zeichenfolie, fotografischen und reprografischen Film sowie für Verpackungs- und Etikettierungszwecke eingesetzt.

Da PET-Folie hydrophob ist und Beschichtungen nicht leicht annimmt, muß sie in den meisten Fällen, in denen sie als Basis- oder Trägerfolie für weitere Beschichtungen dienen soll, zunächst ein- oder beidseitig mit einer Haftvermittlerbeschichtung versehen werden, die an der Folie haftet und gleichzeitig auch für weitere aufgebrachte Beschichtungen aufnahmefähig ist. Aus US-A-2 627 088 und US-A-2 698 240 ist beispielsweise eine Haftvermittlerbeschichtung für PET-Folie bekannt, die aus einem Terpolymeren aus Vinylidenchlorid, Acrylester und Itaconsäure besteht. Diese Haftvermittlerbeschichtung soll eine ausgezeichnete Haftung an der Polyesteroberfläche und auch an nachträglich aufgebrachten fotografischen Gelatineschichten auf der Basis von Wasser oder Alkohol aufweisen.

Als weitere Haftvermittler sind die thermofixierten Acryl- oder Methacrylbeschichtungen gemäß US-A-3 819 773 bekannt, die aus wäßrigem Medium auf PET-Folie aufgebracht werden können. Eine derartige Haftvermittlerbeschichtung verbessert die Haftung von darauf aufgebrachten reprografischen Schichten und Zeichenschichten auf der Basis von organischen Lösemitteln.

Gemäß GB-PS 1 127 076 wird eine Haftvermittlerbeschichtung auf PET-Folie aufgebracht, die aus einem wäßrigen Latex eines unvernetzten Polyvinylacetats bestehen kann. In diesem Patent wird angegeben, daß solche Haftvermittlerbeschichtungen die Folie heißsiegelfähig machen. Aus GB-PS 1 146 215 ist bekannt, eine Haftvermittlerbeschichtung, bestehend aus einer wäßrigen Dispersion eines Copolymeren aus Vinylacetat (100 Teile), Allylmethacrylat (10 Teile) und Itaconsäure (6 Teile), auf PET-Folie aufzubringen. In diesem Patent wird erwähnt, daß der Haftvermittler eine verbesserte Haftung an fotografischen Gelatineschichten auf wäßriger Basis bewirkt, es ist aber nicht beschrieben, daß Beschichtungen auf der Basis von organischen Lösemitteln mit Erfolg auf diese Haftvermittlerbeschichtung aufgebracht werden können. US-A-3 674 531 beschreibt eine Haftvermittlerbeschichtung, die auf PET-Folie aufgebracht wird und die ein Copolymeres eines Vinylhalogenesters, z.B. Vinylchloracetat, enthält, das mit zahlreichen anderen Monomeren copolymerisiert sein kann, z.B. mit Acryl- und Methacrylsäure, -estern und -amiden, Olefinen und Vinylalkohol. Dieses Copolymere kann auch vernetzt sein, z.B. durch ein als Vernetzungsmittel verwendetes Melamin- oder Harnstoff-Formaldehydharz. Die haftvermittlerbeschichtete PET-Folie soll eine verbesserte Haftung gegenüber einer Vielzahl von Beschichtungen, u.a. auch von reprografischen Beschichtungen, aufweisen. US-A-3 624 021 beschreibt eine Mattbeschichtungsmasse für PET-Folie auf Basis einer Mischung aus einem Vinylacetat/Crotonsäure-Copolymeren und einem Überschuß an Harnstoff-Formaldehydharz, das vermutlich bei Wärmeeinwirkung zur Vernetzung führt. Aus GB-PS 1 497 657 ist eine ähnliche Haftvermittlerbeschichtung für PET-Folie bekannt, die auf einer Mischung eines nicht hydrolisierten Polymeren oder Copolymeren von Vinylacetat mit einem oder mehreren zur intramolekularen Vernetzung befähigten synthetischen Harz/en, wie z.B. einem Melamin-Formaldehydharz, basiert. Das Patent gibt an, daß die Haftvermittlerschichtung u.a. als Verankerungsschicht für das Aufbringen weiterer Beschichtungen, wie z.B. lichtempfindlichen Schichten, dienen kann. Ein ähnliches Material ist in US-A-4 066 820 beschrieben. Weitere Patente, die das Aufbringen von vernetzbaren Vinylacetatpolymeren auf verschiedene Oberflächen beschreiben, sind US-A-2 553 524 und US-A-3 307 690.

US-A-3 720 539 beschreibt ein Haftvermittlerschichtungssystem für Polyesterfolie, das aus einer ersten Unterschicht auf der Basis einer ein Polyacrylamid- oder Polyvinylalkoholpolymeres enthaltenden Masse besteht, wobei über eine solche Unterschicht eine weitere Schicht aus einer Mischung von Polyvinylacetat und einem Melamin-Formaldehydharz aufgebracht wird. Dieses System haftet zwar gut auf der Folie, es stellt jedoch eine komplizierte Formulierung dar, die zwei Beschichtungsschritte erforderlich macht und auch Stoffe, wie z.B. Trichloressigsäure, enthält, die in Beschichtungsformulierungen dieser Art nicht erwünscht sind.

Aus GB-PS 1 168 171 ist eine Haftvermittlerschichtung bekannt, die auf eine PET-Folie aufgebracht wird und die als ein härtbares Copolymeres aus einer aliphatischen ungesättigten Carbonsäure und mindestens einem weiteren ethylenisch ungesättigten Monomeren beschrieben wird. In dem Patent wird darauf hingewiesen, daß eine solche Haftvermittlerbeschichtung die Haftung gegenüber fotografischen Gelatineemulsionen auf wäßriger Basis verbessert, es wird aber nicht erwähnt, daß Beschichtungen auf der Basis von organischen Lösemitteln mit Erfolg darauf aufgebracht werden können.

Einige dieser und andere Haftvermittlerschichtungen für Polyesterfolie können zwar das Haftvermögen von PET-Folie wirkungsvoll verbessern, für den Folienhersteller ist es jedoch auch wichtig, daß während der Produktion anfallender Folienabfall im Folienherstellungsverfahren regenerierbar ist. Folienabfall wird normalerweise zerkleinert, geschmolzen, zu Pellets verarbeitet, mit Originalpolyesterrohstoff vermischt, erneut geschmolzen und wieder dem Folienextruder zugeführt. Während der Verarbeitung von PET-Folienregenerat können die Temperaturen zwischen 270 und 310 °C betragen. Viele der obengenannten Haftvermittlerzusammensetzungen sind bei diesen Temperaturen nicht beständig und neigen dazu, die fertige orientierte PET-Folie, die erhebliche Mengen an solchem haftvermittlerbeschichteten Folienregenerat enthält, insbesondere nach wiederholten Durchgängen durch den Extruder, in unerwünschter Weise gelb oder schwarz zu verfärben. Das ist z. B. bei den als Haftvermittlerbeschichtungen für PET verwendeten, Vinylidenchlorid enthaltenden Polymeren gemäß US-A-2 627 088 und US-A-2 698 240 der Fall und ebenso bei den Haftvermittlerbeschichtungen auf der Basis von Vinylchloracetat enthaltenden Copolymeren gemäß US-A-3 674 538 und bei Haftvermittlerbeschichtungen, die auf einer Mischung aus einem Vinylacetatpolymeren oder -copolymeren und gesondert hinzugefügten harzförmigen Vernetzungsmitteln, so wie sie in einigen der obengenannten Patente beschrieben sind, oder Vernetzungsmitteln, wie z. B. Lewis-Säuren oder Werner'schen Komplexen, basieren. Es wurde gefunden, daß die Verfärbung und der Abbau dieser Haftvermittlerbeschichtungen während des Wiedergewinnungsprozesses höchstwahrscheinlich auf die bei chlorhaltigen Haftvermittlerschichten auftretende Entwicklung von Chlorgas oder Chlorwasserstoff und die relative Wärmeinstabilität der als Vernetzungsmittel verwendeten Kondensationsharze, wie z. B. Melamin- oder Harnstoff-Formaldehydharze, zurückzuführen sind.

Obwohl also sehr viele Zusammensetzungen für Haftvermittlerbeschichtungen für PET-Folie bekannt sind, stehen dem Folienhersteller, der nicht nur eine verbesserte Haftung von Beschichtungen auf Lösemittelbasis auf PET-Folie verlangt, sondern auch eine haftvermittlerbeschichtete Folie benötigt, die industriell wiedergewonnen werden kann, solche Beschichtungen nur in begrenzter Anzahl zur Verfügung.

Es ist deshalb Aufgabe der vorliegenden Erfindung, eine orientierte, selbsttragende Polyesterfolie zur Verfügung zu stellen, die eine Haftvermittlerbeschichtung trägt, die sie für Beschichtungen auf der Basis von organischen Lösemitteln besonders aufnahmefähig macht und während der Folienherstellung sicher und leicht aufgebracht werden kann, und die darüber hinaus als mit Haftvermittlerbeschichtung versehenes Folienregenerat dem Folienherstellungsprozeß wieder neu zugeführt werden kann, ohne daß an der fertigen Folie meßbare Gelbfärbungen festgestellt werden, insbesondere im Vergleich mit aus Originalpolyesterrohstoff hergestellten Polyesterfolien.

Gelöst wird diese Aufgabe durch eine Folie der eingangs bereits genannten Gattung, die dadurch gekennzeichnet ist, daß die Haftvermittlerbeschichtung im wesentlichen aus einem Copolymeren aufgebaut ist, bestehend aus den folgenden Monomeren:

i) Vinylacetat in einer Menge von mindestens 50 Gew.-%;

ii) Monomeren, enthaltend eine funktionelle Gruppe, die befähigt ist, in copolymerisiertem Zustand unter Einwirkung von erhöhter Temperatur intermolekulare Vernetzungen auszubilden, in einer Menge von 1 bis 15 Gew.-%;

iii) einem oder mehreren einfach ethylenisch ungesättigten, halogenfreien Monomeren in einer Menge bis zu 49 Gew.-%;
wobei die Prozentangaben jeweils auf das Gesamtgewicht der das Copolymere der Haftvermittlerbeschichtung bildenden Monomeren bezogen sind und wobei die Trockenschichtdicke der Haftvermittlerbeschichtung im Bereich von 0,0025 bis 0,25 µm liegt.

Für die Zwecke dieser Erfindung besteht die orientierte Polyesterträgerfolie vorzugsweise aus Polyethylenterephthalat, obwohl die Erfindung sich ebenso auf Folien auf der Basis eines durch Polykondensation eines Glykols, z. B. Ethylenglykol oder Butandiol und deren Mischungen, mit Terephthalsäure oder Mischungen von Terephthalsäure mit anderen Dicarbonsäuren wie z. B. Isophthalsäure, Diphensäure und Sebacinsäure oder deren polyesterbildende Äquivalente entstandenen kristallisierbaren Polyesters anwenden läßt, wobei diese Polyester nach bekannten Verfahren hergestellt werden.

Die als erfindungsgemäße Haftvermittlerbeschichtungen eingesetzten Vinylacetatcopolymeren bestehen im wesentlichen aus mindestens 50 Gew.-% aus polymerisiertem Vinylacetat, das nicht hydrolisiert oder zu weniger als 25% hydrolisiert ist, und 1 bis 15 Gew.-% eines copolymerisierbaren Comonomeren, das in copolymerisiertem Zustand unter Einwirkung von erhöhter Temperatur, ohne Zusatz eines gesonderten Vernetzungsmittels, zur Ausbildung von intermolekularen Vernetzungen befähigt ist.

Geeignete zur Ausbildung von Vernetzungen befähigte Comonomere (Komponente ii) sind z. B. N-Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z. B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat.

Von den obengenannten Comonomeren werden N-Methylolacrylamid und N-Methylolmethacrylamid bevorzugt, und zwar in erster Linie deswegen, weil Copolymerenketten, die eines dieser Monomere enthalten, unter der Einwirkung von erhöhten Temperaturen zur Kondensation miteinander und somit zur Ausbildung der gewünschten intermolekularen Vernetzungen befähigt sind. Bei Copolymeren, welche die anderen funktionellen Monomeren enthalten, ist es notwendig, Mischungen aus mindestens zwei Copolymeren mit verschiedenen funktionellen Comonomeren herzustellen, wenn man die gewünschte Vernetzung erzielen will, z.B. Mischen eines Vinylacetat/ Crotonsäure-Copolymeren mit einem Vinylacetatcopolymeren, das als funktionelle Gruppen Isocyanat-, Epoxid- oder N-Methylolgruppen enthält, die befähigt sind, mit sauren funktionellen Gruppen zu reagieren.

Weitere spezifische Kombinationen solcher gemischten Vinylacetatcopolymeren umfassen Copolymere mit Monomeren, die als funktionelle Gruppen Epoxidgruppen enthalten, in Verbindung mit Copolymeren mit Monomeren, die als funktionelle Gruppen Amino-, Säureanhydrid-, Carboxyl-, Hydroxyl- oder N-Methylolgruppen enthalten; Copolymere mit Monomeren, die als funktionelle Gruppen N-Methylol- oder N-Methylolethergruppen enthalten, in Verbindung mit Copolymeren mit Monomeren, die als funktionelle Gruppen Carboxyl-, Hydroxyl- oder Aminogruppen enthalten; Copolymere mit Monomeren, die als funktionelle Gruppen Isocyanatgruppen enthalten, in Verbindung mit Copolymeren mit Monomeren, die als funktionelle Gruppen Carboxyl- oder Hydroxylgruppen enthalten, usw.

Vorzugsweise sind die in den gemischten Copolymerensystemen enthaltenen funktionellen Monomeren in etwa äquimolaren Mengen anwesend.

Die Vinylacetatcopolymeren können auch mit bis zu 49 Gew.-% eines oder mehrerer halogenfreier, einfach ethylenisch ungesättigter Monomerer interpolymerisiert sein. Geeignete Comonomere sind z.B. Dialkylmaleate wie z.B. Dioctylmaleat, Diisooctylmaleat und Dibutylmaleat; Vinylester von Versatic-Säure; Styrol und Styrolderivate; Acrylverbindungen wie z.B. Ethylacrylat, Butylacrylat, Methylmethacrylat, Butylmethacrylat und 2-Ethylhexylacrylat; Acrylnitril und ähnliche Verbindungen.

Die für die Zwecke dieser Erfindung bevorzugten zur Vernetzung befähigten, gemischten Copolymerenzusammensetzungen sind Mischungen im Verhältnis von etwa 50:50 eines Vinylacetat/ Crotonsäure-Copolymeren (Monomerenverhältnis 95:5) mit einem Vinylacetat/Glycidylacrylat-Copolymeren (Monomerenverhältnis 95:5); Mischungen eines Vinylacetat/Methacrylamid-Copolymeren (Monomerenverhältnis 95:5) mit einem Vinylacetat/N-Methylolacrylamid-Copolymeren (Monomerenverhältnis 95:5); sowie Zusammensetzungen, die Copolymere auf der Basis von Copolymeren aus Vinylacetat und N-Methylolacrylamid enthalten, wie z.B. Copolymere, die 50 bis 99 Gew.-% an Vinylacetat, 0 bis 49 Gew.-% des einfach ethylenisch ungesättigten Monomeren und 1 bis 15 Gew.-% an N-Methylolacrylamid enthalten. Besonders bevorzugt werden Copolymere verwendet, die über 50 bis 90 Gew.-% an Vinylacetat, 5 bis 45 Gew.-% des einfach ethylenisch ungesättigten Monomeren, bevorzugt Methylmethacrylat, und 5 bis 10 Gew.-% an N-Methylolacrylamid enthalten.

Wie bereits erwähnt erfordert die erfindungsgemäße polymere Vinylacetat-Haftvermittlerzusammensetzung nicht die Anwesenheit eines fremden Vernetzungsmittels wie z.B. eines Melamin- oder Harnstoff-Formaldehyd-Kondensationsproduktes, das beim Regenerieren dazu neigt, eine Gelbfärbung von PET-Folie zu verursachen, obwohl in einigen Fällen geringe Mengen eines sauren Katalysators die Vernetzung erleichtern können.

Die erfindungsgemäße Haftvermittlerbeschichtung wird vorzugsweise in Form einer wäßrigen Dispersion oder als Latex mit einem Feststoffgehalt von 0,5 bis 15%, vorzugsweise 3 bis 10%, auf die Trägerfolie aus Polyester aufgebracht. Der Feststoffgehalt ist so bemessen, daß sich eine Trockenschichtdicke im Bereich von etwa 0,0025 bis 0,25 µm ergibt; in Gewicht ausgedrückt bedeutet dies einen Feststoffgehalt von 0,00305 g/m² bis 0,305 g/m². Bevorzugt hat die getrocknete Haftvermittlerbeschichtung aus vernetztem Vinylacetatcopolymerem eine Dicke im Bereich von ca. 0,015 bis 0,05 µm, wobei 0,025 µm die angestrebte Dicke ist. Die Trägerfolie, auf die die Beschichtung aufgebracht wird, kann eine Dicke von 25 µm bis 250 µm haben.

Die Haftvermittlerbeschichtung kann in jedem geeigneten Stadium während der Folienherstellung auf die Polyesterfolie aufgebracht werden, d.h. vor oder während der Streckvorgänge, und sie wird nach dem Aufbringen durch Beaufschlagung mit Wärme vernetzt. Die entstehende haftvermittlerbeschichtete Polyesterfolie weist eine ausgezeichnete Haftung gegenüber vielen nachträglich aufgebrachten Beschichtungen auf der Basis organischer Lösemittel auf und eignet sich zur Verwendung als Regenerat bei der Wiederverarbeitung zu Polyesterfolie, ohne eine schwerwiegende oder nicht tolerierbare Verfärbung oder einen Abbau der Folie zu verursachen.

Die Folie kann nach gleichfalls bekannten Verfahren und mit bekannten Vorrichtungen hergestellt werden. Es wird z.B. eine Polyesterschmelze bereitet, die als amorphe Folie auf eine hochglanzpolierte rotierende Gießwalze extrudiert wird, wo sie sich zur gegossenen Folie verfestigt. Die Folie wird anschließend axial gestreckt, und zwar bei einer monoaxial orientierten Folie in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Bei dem ersten an der gegossenen Folie durchgeführten Streckschritt kann beliebig in einer dieser beiden rechtwinklig zueinander verlaufenden Richtungen gestreckt werden. Der Verstreckungsgrad, durch den die Folie Festigkeit und Zähigkeit erhält, kann etwa das 3- bis 5fache der ursprünglichen Abmessung der gegossenen Folie in einer oder beiden Richtungen betragen. Vorzugsweise liegt der Verstreckungsgrad im Bereich zwischen etwa dem 3,2- und 4,2fachen der ursprünglichen Abmessung.

Die Streckvorgänge werden bei Temperaturen im Bereich etwa ab der Glasübergangstemperatur bis unterhalb der Temperatur, bei der das Polymere weich wird und schmilzt, durchgeführt.

Nach dem Strecken wird die Folie für die zur Kristallisation des Polyesters notwendige Dauer wärmebehandelt. Durch die Kristallisation erhält die Folie Festigkeit und gute Zugfestigkeitseigenschaften. Die Wärmebehandlung von Polyethylenterephthalat wird bei einer Temperatur im Bereich zwischen etwa 190 °C und 240 °C, vorzugsweise zwischen etwa 215 °C und 235 °C, durchgeführt.

Die erfindungsgemäße Beschichtung wird vorzugsweise in Form einer wäßrigen Dispersion oder Emulsion während der Folienherstellung «in line» aufgebracht: Auf der Stufe vor dem Verstrekken, also zum Zeitpunkt zwischen dem Vergießen der amorphen Folie und dem ersten Strecken, wie es z.B. in GB-PS 1 411 564 beschrieben ist, oder auf der Stufe zwischen den Streckvorgängen, also nach dem Strecken in einer Richtung und vor dem Strecken in der zweiten Richtung, wie es z.B. in US-A-4 214 035 beschrieben ist. Die der Folie beim Strecken oder den abschliessenden Konditionierstufen zugeführte Wärme reicht normalerweise aus, um das Wasser und andere flüchtige Bestandteile aus der Haftvermittlerbeschichtung zu vertreiben und diese zu trocknen und zu vernetzen.

In einer bevorzugten Ausführung wird die Haftvermittlerbeschichtung nach dem uniaxialen Strecken der Folie, d.h. nach dem Strecken der Folie in einer Richtung, jedoch vor dem Strecken in der im rechten Winkel dazu verlaufenden Richtung, aufgebracht. In einer weiteren bevorzugten Ausführung wird die Polyesterfolie vor dem Beschichten zunächst in Längsrichtung gestreckt. In dieser bevorzugten Ausführung wird die Folie nach dem Strecken in Längsrichtung nach einem der auf diesem Gebiet angewendeten bekannten Verfahren beschichtet. Das Beschichten kann z.B. durch Walzenbeschichtung, Sprühbeschichtung, Gravurbeschichtung, Schlitzgießerantrag oder Tauchbeschichtung erfolgen. Bevorzugt wird die Polyesterfolie mit Gravurwalzen beschichtet. Vor dem Beschichten wird die uniaxial gestreckte Folie vorzugsweise noch in bekannter Weise einer Coronabehandlung in einer Coronaentladevorrichtung unterzogen. Die Coronabehandlung vermindert die Hydrophobie der Polyesterfolienoberfläche, wodurch die wäßrige Beschichtung die Oberfläche besser benetzen und somit die Haftung der Beschichtung an der Oberfläche verbessern kann.

Die Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z.B. Antistatika, Netzmittel, Tenside, pH-Regulatoren, Antioxidantien, Farbstoffe, Pigmente, Anti-Blockmittel wie z.B. kolloidales $SiO_2$ usw. Normalerweise ist es angebracht, ein ionisches Tensid einzuarbeiten, um die Fähigkeit der wäßrigen Beschichtung zur Benetzung der Trägerfolie aus Polyester zu erhöhen und damit die Haftung weiter zu verbessern.

Die erfindungsgemäßen Haftvermittlerbeschichtungen haben eine ausgezeichnete Wärmestabilität, und deshalb kann der bei der Herstellung anfallende Abfall der beschichteten Folie, mit frischem Polyester gemischt, wieder geschmolzen und zur Herstellung von orientierter Folie erneut in den Folienextruder eingespeist werden. Mit den hier verwendeten Begriffen «frischer Polyester» oder «Originalpolyesterrohstoff» wird ein Polyester bezeichnet, der selbst kein Regenerat fertiger Produkte wie z.B. einer Folie oder Faser ist, sondern zum erstenmal bei der Herstellung solcher Produkte eingesetzt wird. Eine so hergestellte Folie mit einem Gehalt von 5 bis zu etwa 70 Gew.-% an Regenerat aus beschichtetem Abfall, vorzugsweise mit einem Gehalt von jeweils 50 Gew.-% an Regenerat und frischem Polyester, erweist sich als gut in Qualität, Farbe und Aussehen und zeigt einen kaum wahrnehmbaren Abbau der Eigenschaften durch die von der Beschichtung herrührende Verunreinigung. Die beschichtete Folie nach dieser Erfindung bietet also dem Folienhersteller einen deutlichen wirtschaftlichen Vorteil gegenüber vielen anderen beschichteten Folien wie z.B. Folien, die mit Vinylidenchlorid enthaltenden Polymeren beschichtet sind, wie in US-A-2 627 088 und US-A-2 698 240 beschrieben, die zum Polymerenabbau und zur Verfärbung neigen, wenn sie wie oben angegeben wiedergewonnen werden. Ähnliche Vorteile ergeben sich auch gegenüber den thermofixierten Acrylbeschichtungen, die harzförmige Vernetzungsmittel enthalten, wie sie in US-A-3 819 773 beschrieben sind, oder gegenüber den Vinylacetatpolymeren mit harzförmigen Vernetzungsmitteln gemäß GB-A-1 497 657.

Die erfindungsgemäße wieder extrudierte Folie kann soviel an mit Haftvermittlerbeschichtung beschichtetem Folienregenerat enthalten, daß ihr Gehalt an vernetzter Vinylacetatbeschichtung bis zu 1,0 Gew.-%, vorzugsweise 0,01 bis 0,5 Gew.-%, beträgt. Die wieder extrudierte Folie kann als Fertigfolie oder als Trägerfolie für die hier beschriebenen vernetzten Vinylacetatbeschichtungen oder andere Haftvermittlerbeschichtungen aus dem Stand der Technik verwendet werden.

Eine mit der erfindungsgemäßen Zusammensetzung beschichtete Polyesterfolie eignet sich ausgezeichnet als Trägerfolie für die Herstellung von lichtempfindlichen reprografischen Filmen. Bei der Herstellung solcher Filme wird auf eine Oberfläche der haftvermittlerbeschichteten Polyesterfolie eine lichtempfindliche Beschichtung aufgebracht, die aus einer Lösung eines eine lichtempfindliche Diazoniumverbindung enthaltenden oder damit imprägnierten harzförmigen Bindemittels in einem organischen Lösemittel besteht, und die lichtempfindliche Beschichtung wird anschließend getrocknet. Für diesen Zweck geeignete harzförmige Bindemittel sind z.B. Celluloseacetobutyrat, Celluloseacetat, Celluloseacetopropionat sowie Vinylpolymere wie z.B. Polyvinylacetat. Als Lösemittel sind z.B. Aceton, Methylethylketon, Methylisobutylketon, Ethylenglykolmonomethylether und Mischungen dieser Substanzen geeignet. Die reprografischen Beschichtungen und die Verfahren zu ihrer Aufbringung und Verwendung sind bekannt.

In gleicher Weise stellt die erfindungsgemäß haftvermittlerbeschichtete Polyesterfolie ein ausgezeichnetes Substrat für das Aufbringen von Mattbeschichtungen dar, wodurch die Folie als Zeichenmaterial zu verwenden ist. Diese Mattbeschichtungen können auf Zusammensetzungen basieren, die aus einem harzförmigen Bindemittel und einem feinteiligen, als «Körnungsmittel» dienenden, in organischen Lösemitteln dispergierten partikelförmigen Material bestehen. Als harzförmige Bindemittel können die bereits bei den reprografischen Anwendungen genannten harzförmigen Materialien sowie Acryl- oder Methacrylharze verwendet werden. Die organischen Lösemittel können ebenfalls die oben aufgeführten Lösemittel sein. Zu den partikelförmigen Materialien (Partikelgröße unter 10 μm) zählen Tone oder $SiO_2$. In solchen Mattbeschichtungen können auch andere Bestandteile wie z.B. Eindickungsmittel oder Dispergiermittel enthalten sein. Mattbeschichtungen dieser Art sind z.B. aus GB-A-1 072 122 und US-A-3 624 021 bekannt.

Die erfindungsgemäße haftvermittlerbeschichtete Folie kann ferner als Verpackungs- oder Etikettierungsmaterial eingesetzt werden. Verglichen mit unbeschichteter Folie weisen die haftvermittlerbeschichteten Folien eine verbesserte Haftung gegenüber Druckfarben auf der Basis von organischen Lösemitteln auf. Diese Druckfarben können in organischen Lösemitteln hergestellte Dispersionen oder Lösungen von Pigmenten und/oder Farbstoffen in Verbindung mit Acrylharzen oder anderen Harzen und Eindickungsmitteln sein.

Das ausgezeichnete Haftvermögen der mit den erfindungsgemäßen vernetzten Vinylacetatcopolymerschichten haftvermittlerbeschichteten Polyesterfolie an darauf aufgebrachten Beschichtungen auf der Basis von organischen Lösemitteln macht eine solche Folie für den Hersteller von fertigen reprografischen, grafischen und Verpackungsmaterialien universeller nutzbar.

Das Haftvermögen der behandelten Folie ist in Tabelle 1 anhand eines Versuchs mit einer üblichen in organischem Lösemittel hergestellten reprografischen Beschichtung veranschaulicht.

Die reprografische Haftung wurde mit einem Lack der folgenden Zusammensetzung ermittelt: 9 Gew.-Teile Celluloseacetobutyrat (20-Sekunden-Type), gelöst in einer Mischung aus 88 Gew.-Teilen Ethylenglykolmonomethylether und 3 Gew.-Teilen Methylethylketon, wobei Rhodamin B als Farbstoff zugesetzt wurde (3 Gew.-Teile einer 1%igen Lösung von Rhodamin B in n-Butanol). Der Lack wurde mit Hilfe eines drahtumwickelten Stabes (Meyer-Rod Nr. 70) auf die beschichtete Oberfläche der Folie aufgetragen und 5 min bei 60°C im Ofen getrocknet. Mit einem Skalpell wurde eine Kreuzschraffierung in die Beschichtung eingeritzt, auf die schraffierte Fläche ein Klebeband (Scotch Tape 610) aufgedrückt, mit dem Fingernagel fest angedrückt und dann rasch von der Folie abgezogen. Der auf der schraffierten Fläche zurückbleibende Lack wurde als Prozentanteil des insgesamt aufgetragenen Lackes angegeben, d.h. kein Lack abgezogen = 100% Haftung, der gesamte Lack abgezogen = 0% Haftung, die Haftungswerte zwischen 0 und 100% bezeichnen jeweils den auf der Folie zurückgebliebenen Lackanteil. Der Versuch wurde zweimal an zwei Folienbögen (also insgesamt an vier Stellen) durchgeführt, und als Haftungswert wurde der Wert des Prüfbereichs mit dem schlechtesten Ergebnis angegeben.

Repro-Haftungsversuche, die eine Haftung von weniger als 95% ergeben, gelten generell als nicht annehmbar, während Ergebnisse, die 100% Haftung zeigen, die angestrebte Norm sind.

In den folgenden Beispielen wird die Erfindung näher erläutert.

Beispiel 1

Ein Latex mit 4,5 Gew.-% an Feststoff, bestehend aus einem Copolymeren aus 90 Gew.-% Vinylacetat, 5 Gew.-% Methylmethacrylat und 5 Gew.-% N-Methylolacrylamid, und 0,5 Gew.-% an Feststoff, bestehend aus kolloidalem $SiO_2$ und einem anionischen Tensid, wurde nach dem folgenden Verfahren als Haftvermittlerbeschichtung auf Polyethylenterephthalatfolie aufgebracht:

Aus Polyethylenterephthalatpolymerem wurde eine Schmelze hergestellt und diese durch eine Breitschlitzdüse auf eine auf etwa 20°C gehaltene Gießwalze extrudiert, wo sie zu einer gegossenen Folie erstarrte. Die gegossene Folie wurde im Streckverhältnis von etwa 3,6:1 längsgestreckt, wobei sie auf einer Temperatur von 80°C gehalten wurde.

Die längsgestreckte Folie wurde in einem Coronaentladegerät coronabehandelt und danach durch Reversgravurbeschichtung mit dem oben beschriebenen Latex beschichtet.

Die längsgestreckte, coronabehandelte und beschichtete Folie wurde bei einer Temperatur von etwa 100°C getrocknet. Danach wurde die Folie im Streckverhältnis 3,6:1 quergestreckt, so daß man eine biaxial gestreckte Folie erhielt. Die biaxial gestreckte Folie wurde bei 230°C thermofixiert. Diese Wärmebehandlungen führten zum Vernetzen der Haftvermittlerbeschichtung. Das Trockengewicht der Beschichtung betrug ca. 0,035 $g/m^2$ bei einer Beschichtungsdicke von etwa 0,025 μm und einer Dicke der Trägerfolie von ca. 75 μm.

Beispiele 2 bis 8

In der gleichen Weise wie in Beispiel 1 dargestellt wurden sieben weitere erfindungsgemäße Beschichtungsmassen mit den in Tabelle 1 angegebenen Zusammensetzungen nach den oben beschriebenen Verfahren auf Polyesterfolie aufgebracht. In allen Fällen betrug die fertige Beschichtungsdicke auf der Basis des Trockengewichts ca. 0,025 μm.

Diese haftvermittlerbeschichtete Folie wurde nach der obengenannten Prüfmethode auf ihre Haftung gegenüber Beschichtungen auf Lösemittelbasis geprüft. Die Ergebnisse sind in Tabelle 1 im Vergleich zu einer nicht haftvermittlerbeschichteten Polyethylenterephthalatfolie (Vergleich) aufgeführt.

Tabelle 1

| Beispiel | Haftvermittlerzusammen-setzung | Repro-Haftungsergebnis |
|---|---|---|
| 1 | VA (90) MMA (5) NMA (5) | 100% |
| 2 | VA (95) NMA (5) | 95% |
| 3 | VA (80) MMA (15) NMA (5) | 100% |
| 4 | VA (75) MMA (20) NMA (5) | 100% |
| 5 | VA (70) MMA (25) NMA (5) | 100% |
| 6 | VA (60) MMA (35) NMA (5) | 100% |
| 7 | VA (50) MMA (45) NMA (5) | 100% |
| 8 | VA (65) MMA (25) NMA (10) | 100% |
| Vergleich | (ohne Haftvermittler) | 0% |

Anmerkungen zu Tabelle 1:
VA = Vinylacetat
MMA = Methylmethacrylat
NMA = N-Methylolacrylamid

Die Verbesserung bei der Regenerierbarkeit von Polyesterfolie, die mit den erfindungsgemäßen Copolymeren haftvermittlerbeschichtet wurde, gegenüber haftvermittlerbeschichteten Folien aus dem Stand der Technik wurde durch vergleichende Versuche ermittelt. Dazu wurde jeweils eine beschichtete Folie wie oben beschrieben hergestellt, die in einem Fall (A) mit einem Acrylpolymeren auf der Basis eines Copolymeren aus Ethylacrylat, Methylmethacrylat und Methacrylamid und mit einem Gehalt von 20%, bezogen auf das Trockengewicht, an Melamin-Formaldehydharz als Vernetzungsmittel beschichtet war. Im zweiten Fall (B) wurde die Folie mit einem Vinylacetatcopolymeren beschichtet, das gleichfalls 20%, bezogen auf das Trockengewicht, eines Melamin-Formaldehydharzes als Vernetzungsmittel enthielt. In beiden Fällen wurde eine 75 µm dicke PET-Folie mit einer Trockenschichtdicke von ca. 0,025 µm beschichtet.

Die Regenerierbarkeit dieser beiden Folien wurde im Vergleich zu der Folie aus Beispiel 4 oben (C) beurteilt, wobei man jede beschichtete Folienprobe zu Flocken zerkleinerte, diese bei einer Temperatur von 290 °C durch einen Strangextruder führte, um die Flocken zu schmelzen und das Strangextrudat anschließend zu Pellets zerschnitt. Die entstehenden Pellets wurden dann jeweils mit 50 Gew.-% an Pellets aus Originalpolyesterrohstoff vermischt und jede Mischung bei 290 °C erneut extrudiert und zusätzlich dreimal pelletisiert.

Eine visuelle Prüfung der relativen Verfärbung der resultierenden wärmebehandelten Pelletproben zeigte, daß die auf Proben A und B basierenden Pellets wesentlich gelber und dunkler waren als die auf Probe C basierenden Pellets.

**Patentansprüche**

1. Schmelzextrudierte, orientierte, selbsttragende Polyesterfolie mit einer durchgehenden, ein- oder beidseitig aufgebrachten, vernetzten Haftvermittlerbeschichtung, dadurch gekennzeichnet, daß die Haftvermittlerbeschichtung im wesentlichen aus einem Copolymeren aufgebaut ist, bestehend aus den folgenden Monomeren:
i) Vinylacetat in einer Menge von mindestens 50 Gew.-%;
ii) Monomeren, enthaltend eine funktionelle Gruppe, die befähigt ist, in copolymerisiertem Zustand unter Einwirkung von erhöhter Temperatur intermolekulare Vernetzungen auszubilden, in einer Menge von 1 bis 15 Gew.-%;
iii) einem oder mehreren einfach ethylenisch ungesättigten, halogenfreien Monomeren in einer Menge bis zu 49 Gew.%;
wobei die Prozentangaben jeweils auf das Gesamtgewicht der das Copolymere der Haftvermittlerbeschichtung bildenden Monomeren bezogen sind und wobei die Trockenschichtdicke der Haftvermittlerbeschichtung im Bereich von 0,0025 bis 0,25 µm liegt.

2. Folie nach Anspruch 1, dadurch gekennzeichnet, daß die Polyesterfolie eine biaxial orientierte Polyethylenterephthalatfolie ist.

3. Folie nach Anspruch 1 oder 2, dadurch gekennzeichnet, daß die funktionelle Gruppe des eine funktionelle Gruppe enthaltenden Monomeren (Komponente ii) ausgewählt ist aus der Gruppe umfassend Amino-, Säureamid-, Säureanhydrid-, N-methylol-, Carboxyl-, Hydroxyl-, Epoxyund Isocyanatgruppen, bevorzugt ist das eine funktionelle Gruppe enthaltende Monomere N-methylolacrylamid oder N-methylolmethacrylamid, bevorzugt in einer Menge von 5 bis 10 Gew.-%.

4. Folie nach einem der Ansprüche 1 bis 3, dadurch gekennzeichnet, daß das einfach ethylenisch ungesättigte Monomere (Komponente iii) bevorzugt Methyl-methacrylat ist, bevorzugt in einer Menge von 5 bis 45 Gew.-%.

5. Folie nach einem der Ansprüche 1 bis 4, dadurch gekennzeichnet, daß die Polyesterfolie aus Polyestermaterial besteht, welches eine innige Mischung ist von 30 bis 95 Gew.-% Originalpolyesterrohstoff und dementsprechend 70 bis 5 Gew.-% aus mit Haftvermittlerbeschichtung beschichtetem Folienabfall regeneriertem Polyester.

6. Folie nach einem der Ansprüche 1 bis 5, dadurch gekennzeichnet, daß das Polyestermaterial der Polyesterfolie 0,01 bis 1,0 Gew.-% von dem die Haftvermittlerbeschichtung bildenden Copolymeren enthält.

7. Verfahren zur Herstellung einer Folie nach einem der Ansprüche 1 bis 6, bei dem durch Schmelzextrusion zunächst eine amorphe Polyesterfolie hergestellt wird, die danach durch Strecken in eine oder zwei Richtungen orientiert und hitzefixiert wird, dadurch gekennzeichnet, daß die Haftvermittlerbeschichtung entweder vor dem Strecken in eine Richtung oder nach dem Strecken in eine Richtung, aber vor dem Strecken in die andere Richtung aus wäßrigem Medium auf die Polyesterfolie aufgebracht wird.

8. Verfahren nach Anspruch 7 zur Herstellung einer Folie nach Anspruch 6, dadurch gekennzeichnet, daß der mit Haftvermittlerbeschichtung beschichtete Folienabfall zerkleinert, bei Temperaturen zwischen 270 °C und 310 °C geschmolzen und vor der Extrusion mit dem Originalpolyesterrohstoff vermischt wird.

9. Verfahren nach Anspruch 7 zur Herstellung einer Folie nach Anspruch 6, dadurch gekennzeichnet, daß der mit Haftvermittlerbeschichtung beschichtete Folienabfall zerkleinert und zu Pellets verdichtet wird, dann die Pellets mit 30 bis 95 Gew.-%, bevorzugt mit 50 Gew.-%, bezogen auf das Gesamtgewicht des Polyestermaterials, Granulat aus Originalpolyesterrohstoff vermischt werden und die Mischung geschmolzen und zur Folie extrudiert wird.

10. Verwendung einer Folie nach einem der Ansprüche 1 bis 6, hergestellt nach einem Verfahren nach einem der Ansprüche 7 bis 9 als Trägermaterial für lichtempfindliche Materialien, umfassend eine Lage aus harzartigem Bindemittel und lichtempfindlichen Diazoniumsalz, oder für graphische Materialien, umfassend eine Lage aus harzartigem Bindemittel und darin fein verteiltem partikelförmigem Material.

**Claims**

1. Melt-extruded, oriented, self-supporting polyester film having a continuous, crosslinked primer coating applied to one or both sides thereof, wherein the primer coating consists essentially of a copolymer of the following monomers:
i) vinyl acetate in an amount of at least 50% by weight;
ii) a monomer containing a functional group which, in the copolymerized state, is capable of intermolecular crosslinking under the action of an elevated temperature, in an amount from 1 to 15% by weight;
iii) one or more monoethylenically unsaturated, halogen-free monomers in an amount of up to 49% by weight;
the percentages relating, in each case, to the total weight of the monomers forming the copolymer of the primer coating and the dry thickness of the primer coating being in the range from 0.0025 to 0.25 μm.

2. A film as claimed in claim 1, wherein the polyester film is a biaxially oriented polyethylene terephthalate film.

3. A film as claimed in claim 1 or 2, wherein the functional group of the monomer containing a functional group (component ii) is selected from the group consisting of amino, acid amide, acid anhydride, N-methylol, carboxyl, hydroxyl, epoyy and isocyanate groups, the monomer containing a functional group preferably comprises N-methylol acrylamide or N-methylol methacrylamide, preferably in an amount from 5 to 10% by weight.

4. A film as claimed in any of claims 1 to 3, wherein the monoethylenically unsaturated monomer (component iii) is preferably methylmethacrylate, preferably in an amount from 5 to 45% by weight.

5. A film as claimed in any of claims 1 to 4, wherein the polyester film is formed of a polyester material comprising an intimate mixture of from 30 to 95% by weight of fresh polyester raw material and, correspondingly, from 70 to 5% by weight of polyester regenerated from primer-coated scrap film.

6. A film as claimed in any of claims 1 to 5, wherein the polyester material of the polyester film contains from 0.01 to 1.0% by weight of the copolymer forming the primer coating.

7. A process for the production of a film as claimed in any of claims 1 to 6, comprising the steps of first preparing an amorphous polyester film by melt extrusion and thereafter orienting the film by stretching in one or two directions and heat setting the film, wherein the primer coating is applied to the polyester film from an aqueous medium, either prior to stretching in one direction or subsequent to stretching in one direction but prior to stretching in the other direction.

8. A process as claimed in claim 7 for the production of a film as claimed in claim 6 wherein the primer-coated scrap film is comminuted, melted at temperatures between 270 °C and 310 °C and mixed with fresh polyester raw material prior to extrusion.

9. A process as claimed in claim 7 for the production of a film as claimed in claim 6, wherein the primer-coated scrap film is comminuted and compacted into pellets, the pellets are then mixed with 30 to 95% by weight, preferably 50% by weight, relative to the total weight of the polyester material, of granulated fresh polyester raw material and the mixture is melted and extruded to give a film.

10. Use of a film as claimed in any of claims 1 to 6, produced according to a process as claimed in any of claims 7 to 9, as a support material for light-sensitive materials comprising a layer formed from a resinous binder and a light-sensitive diazonium salt or for graphic materials comprising a layer formed a resinous binder containing a finely divided particulate material.

## Revendications

1. Feuille de polyester extrudée à chaud, orientée, auto-porteuse, comportant un revêtement réticulé favorisant l'adhérence, continu, appliqué sur un côté ou sur les deux, caractérisée en ce que le revêtement favorisant l'adhérence est essentiellement constitué d'un copolymère à base des monomères suivants:

I) acétate de vinyle en une quantité d'au moins 50% en poids;

II) monomère contenant un groupe fonctionnel qui est capable à l'état copolymérisé, sous l'effet d'une température élevée, de former des réticulations intermoléculaires, en une quantité de 1 à 15% en poids;

III) un ou plusieurs monomères à une seule insaturation éthylénique, exempts d'halogène, en une quantité allant jusqu'à 49% en poids;

les pourcentages étant donnés chacun par rapport au poids total des monomères formant le copolymère du revêtement favorisant l'adhérence, et l'épaisseur de couche sèche du revêtement favorisant l'adhérence étant dans la plage de 0,0025 à 0,25 µm.

2. Feuille selon la revendication 1, caractérisée en ce que la feuille de polyester est une feuille de polytéréphtalate d'éthylène orientée biaxialement.

3. Feuille selon la revendication 1 ou 2, caractérisée en ce que le groupe fonctionnel du monomère contenant un groupe fonctionnel (composant II) est choisi parmi des groupes amino, amido, anhydride d'acide, N-méthylol, carboxy, hydroxy, époxy et isocyanate, le monomère contenant un groupe fonctionnel est de préférence le N-méthylolacrylamide ou le N-méthylolméthacrylamide, de préférence en une quantité de 5 à 10% en poids.

4. Feuille selon l'une des revendications 1 à 3, caractérisée en ce que le monomère à une seule insaturation éthylénique (composant III) est de préférence le méthacrylate de méthyle, de préférence en une quantité de 5 à 45% en poids.

5. Feuille selon l'une des revendications 1 à 4, caractérisée en ce que la feuille de polyester est constituée d'un matériau polyester qui est un mélange interne de 30 à 95% en poids de matière polyester initiale et, en conséquence, de 70 à 5% en poids de polyester régénéré à partir de déchets de feuille revêtue d'un revêtement favorisant l'adhérence.

6. Feuille selon l'une des revendications 1 à 5, caractérisée en ce que le matériau polyester de la feuille de polyester contient de 0,01 à 1,0% en poids du copolymère constituant le revêtement favorisant l'adhérence.

7. Procédé pour la fabrication d'une feuille selon l'une des revendications 1 à 6, dans lequel on prépare d'abord par extrusion à chaud une feuille de polyester amorphe qui est ensuite orientée par étirage dans une ou deux directions, puis thermofixée, caractérisé en ce que l'on applique sur la feuille de polyester le revêtement favorisant l'adhérence, à partir d'un milieu aqueux, soit avant l'étirage dans une direction, soit après l'étirage dans une direction, mais avant l'étirage dans l'autre direction.

8. Procédé selon la revendication 7 pour la fabrication d'une feuille selon la revendication 6, caractérisé en ce que le déchet de feuille revêtue avec le revêtement favorisant l'adhérence est fragmenté, fondu à des températures comprises entre 270 et 310 °C, puis mélangé avec de la matière première polyester initiale, avant l'extrusion.

9. Procédé selon la revendication 7 pour la fabrication d'une feuille selon la revendication 6, caractérisé en ce que l'on fragmente et comprime en pastilles le déchet de feuille revêtue avec le revêtement favorisant l'adhérence, puis on mélange les pastilles avec de 30 à 95% en poids, de préférence avec 50% en poids, par rapport au poids total du matériau polyester, de produit granulé constitué de matière première polyester initiale, et on fait fondre le mélange et l'extrude en la feuille.

10. Utilisation d'une feuille selon l'une des revendications 1 à 6, fabriquée selon un procédé selon l'une des revendications 7 à 9, en tant que matériau de support pour des matériaux photosensibles comprenant une couche de liant de type résine et un sel de diazonium photosensible, ou pour des matériaux graphiques comprenant une couche de liant de type résine et un matériau particulaire finement divisé contenu dans celle-ci.